# EUROPÄISCHE PATENTSCHRIFT

(11) **EP 0 356 391 B1**
(45) Veröffentlichungstag und Bekanntmachung des Hinweises auf die Patenterteilung: **01.03.1995**
(21) Anmeldenummer: 89810605.9
(22) Anmeldetag: 15.08.1989
(51) Int. Cl.: C08G 59/04, C08G 6/02

(54) **Epoxidgruppenhaltige modifizierte Acetophenon-Formaldehyd-Harze**
Modified acetophenone formaldehyde resins containing epoxy groups
Résine acétophénone formaldéhyde modifiée contenant des groupes époxydes

(30) Priorität: 22.08.1988 CH 3110/88
(43) Veröffentlichungstag der Anmeldung: 28.02.1990
(73) Patentinhaber: CIBA-GEIGY AG, 4002 Basel (CH)
(72) Erfinder: Cotting, Jacques-Alain, Dr., CH-1729 Bonnefontaine (CH); Renner, Alfred Renner, Dr., CH-3286 Montelier (CH)

(56) Entgegenhaltungen:
- EP-A- 0 111 686
- GB-A- 779 092

## Beschreibung

Die Erfindung betrifft epoxidgruppenhaltige modifizierte Acetophenon-Formaldehyd-Harze, welche durch Umsetzung von Acetophenon mit 0,7 bis 1,4 Mol Formaldehyd pro Mol Acetophenon, gefolgt von Hydrierung und anschliessender Glycidylierung des Produktes hergestellt werden, sowie härtbare Epoxidharz-Stoffgemische enthaltend diese Harze und deren Verwendung für die Herstellung von vernetzten Produkten, insbesondere für die Herstellung von Pulverlacken.

Acetophenon-Formaldehyd-Harze sind bekannt und sind beispielsweise in Ullmanns Encyclopädie der technischen Chemie, 4. Aufl., Band 12, Seite 549 und 550 beschrieben. Sie werden durch alkalisch katalysierte Kondensation von Acetophenon mit Formaldehyd hergestellt und weisen in Abhängigkeit vom verwendeten Mengenverhältnis der Reaktanden und von den Reaktionsbedingungen unterschiedliche Molekulargewichte und einen tieferen oder höheren Gehalt an Hydroxylgruppen auf. Auch durch Hydrierung modifizierte Acetophenon-Formaldehyd-Harze sind bekannt und sind ebenfalls in der erwähnten Literaturstelle beschrieben.

In der US Patentschrift 2,462,031 wird die Kondensation von Ketonen mit Formaldehyd beschrieben. Unter den Ketonen, welche für die Kondensation verwendet werden können, wird auch Acetophenon erwähnt.

Die EP Patentschrift 41 200 beschreibt Beschichtungsmittel auf der Basis von Epoxidharzen, welche neben Epoxidharzen des Bisphenol A- und/oder des Bisphenol F-Typs und Aminhärtern für Epoxidharze noch zusätzlich Ketonharze, z.B. Cyclohexanon-Formaldehyd Harze, enthalten. Durch die Zugabe des Ketonharzes werden der oberflächliche Filmabbau bei Bewitterung vermindert und die Ueberstreichbarkeit der Beschichtung verbessert.

In der GB-A-779 092 ist die Modifizierung bestimmter Aldehyd/Keton Harze mit Epoxidgruppen durch Umsetzung mit Epichlorhydrin in Gegenwart von Lewissäurekatalysatoren gefolgt von einer Dehydrohalogenierung offenbart. Die Epoxidharze weisen einen Chlorgehalt von 1 bis 15 Gew.-%auf, der für manche Anwendungen zu hoch ist.

Die JP-OS 50-67 399/1975 beschreibt Epoxidharz-Stoffgemische, worin die Epoxidharzkomponente durch Glycidylierung von Hydantoin-Formaldehyd-Kondensationsprodukten erhalten wird. Die Wasserfestigkeit dieser Systeme ist aber nicht immer zufriedenstellend.

Es wurde nun gefunden, dass die Umsetzung bestimmter modifizierter Acetophenon-Formaldehyd-Harze mit Epichlorhydrin in Gegenwart eines Phasentransferkatalysators gefolgt von Dehydrochlorierung der so entstandenen Chlorhydrinether zu Polyglycidylethern mit vorzüglichen Eigenschaften führt.

Gegenstand der Erfindung sind Polyglycidylether, die dadurch erhältlich sind, dass man Acetophenon mit 0,7 bis 1,4 Mol Formaldehyd pro Mol Acetophenon in Gegenwart eines alkalischen Katalysators bei einer Temperatur von 50-100°C zu einem carbonylgruppenhaltigen Acetophenon-Formaldehyd-Harz umsetzt, das carbonylgruppenhaltige Harz zu einem modifizierten hydroxylgruppenhaltigen Acetophenon-Formaldehyd-Harz hydriert, dieses Harz anschliessend mit Epichlorhydrin in Gegenwart eines Phasentransferkatalysators in den entsprechenden Polychlorhydrinether überführt, und diesen mit einer Base dehydrochloriert.

Die erfindungsgemässen Polyglycidylether werden erhalten, wenn bei der Herstellung der carbonylgruppenhaltigen Acetophenon-Formaldehyd-Harze pro Mol Acetophenon 0,7 bis 1,4 Mol Formaldehyd eingesetzt werden. Falls weniger als 0,7 Mol Formaldehyd verwendet werden, entstehen Keton-Formaldehydharze mit einem hohen Molekulargewicht und Erweichungspunkt, einem tiefen Carbonylgruppengehalt und schlechter Löslichkeit. Bei Verwendung von mehr als 1,4 Mol Formaldehyd pro Mol Acetophenon andererseits entstehen viskose oder flüssige Produkte, welche zu, z.B. für die Herstellung von Pulverlacken, ungeeigneten Polyglycidylethern führen. Bevorzugt werden erfindungsgemässe Polyglycidylether, bei deren Herstellung pro Mol Acetophenon 0,9 bis 1,1, insbesondere 1 Mol Formaldehyd eingesetzt werden.

Die Umsetzung des Acetophenons mit Formaldehyd erfolgt vorzugsweise in Gegenwart von 0,05 bis 0,3 Mol, insbesondere von 0,1 bis 0,2 Mol, eines alkalischen Katalysators pro Mol des Acetophenons. Beispiele geeigneter alkalischer Katalysatoren sind Alkalimetallhydroxide, wie Lithium-, Natrium- oder Kaliumhydroxid, Erdalkalimetallhydroxide oder -oxide, wie Magnesium- oder Calciumhydroxid oder -oxid, Alkalimetallalkoholate, wie Natrium- oder Kaliummethoxid oder -ethoxid, oder organische Basen, wie Trimethylbenzylammoniumhydroxid oder basische Amine. Bevorzugter alkalischer Katalysator ist Natriumhydroxid.

Die Umsetzung des Acetophenons mit Formaldehyd wird vorzugsweise bei einer Temperatur zwischen 60 bis 90°C, insbesondere 70 bis 90°C, während 2 bis 5 Stunden durchgeführt und findet vorzugsweise in wässriger Lösung statt. Dabei kann die Reaktion geeigneterweise bei einem konstanten pH, z.B. um etwa pH 12, durchgeführt werden, indem die benötigte Menge einer wässrigen Base, z.B. einer Natriumhydroxidlösung, kontinuierlich zugegeben wird.

Das durch die Kondensation erhaltene carbonylgruppenhaltige Acetophenon-Formaldehyd-Harz wird in an sich bekannter Weise zu einem modifizierten hydroxylgruppenhaltigen Acetophenon-Formaldehyd-Harz hydriert. Die Hydrierung erfolgt vorzugsweise in einem inerten Lösungsmittel, wie z.B. Butanol, THF, Dioxan oder in der Schmelze in Gegenwart von Hydrierungskatalysatoren. Geeignete Katalysatoren sind z.B. Raneynickel und Metallkatalysatoren, wie Nickel, Palladium, Palladium/Kupfer oder Palladium/Nickel.

Besonders geeignete Lösungsmittel sieden oberhalb etwa 180°C und lösen sowohl das zu hydrierende Harz als auch entstehende Hydrierungsprodukte. Beispiele dafür sind hochsiedende Ether, Ester und Alkohole, insbesondere die Alkylether von Ethylenglykol oder Diethylenglykol. Verfahren zur Hydrierung von Keton-Formaldehyd Harzen, wie z.B. Acetophenon-Formaldehydharzen, werden beispielsweise in den DE Patentschriften 826 974 und 907 348 und in der EP-A 111 686 beschrieben.

Durch Hydrierung modifizierte Acetophenon-Formaldehyd-Harze sind auch im Handel erhältlich. Ein solches Handelsprodukt ist Kunstharz SK® der Fa. Hüls AG.

Die erfindungsgemässen Polyglycidylether werden anschliessend durch Umsetzung der hydroxylgruppenhaltigen Acetophenon-Formaldehyd-Harze mit Epichlorhydrin in Gegenwart eines Phasentransferkatalysators, gefolgt von Dehydrochlorierung des Kondensationsproduktes mit einer Base, z.B. mit Natronlauge, hergestellt. Geeignete Phasentransferkatalysatoren sind z.B. tertiäre Sulfoniumsalze, quaternäre Phosphonium- und insbesondere quaternäre Ammoniumsalze. Vorzugsweise können z.B. Tetraethylammonium-, Tetrabutylammonium-, Benzyltrimethylammonium- und insbesondere Tetramethylammoniumsalze, z.B. Chloride, verwendet werden. Bevorzugt wird die Umsetzung mit einem Ueberschuss von Epichlorhydrin ohne Lösungsmittel durchgeführt, wobei der Phasentransferkatalysator und die Base als wässrige Lösungen beigegeben werden. Während der Reaktion können geeigneterweise das Lösungswasser und das bei der Umsetzung entstandene Wasser durch azeotrope Destillation kontinuierlich entfernt werden.

Die erfindungsgemässen Polyglycidylether sind in der Regel fest und haben vorzugsweise ein Molekulargewicht M̅ₙ (Gelpermeationschromatographie in THF) von 800-1100, ein M̅_{w}/M̅ₙ von 1,20-1,60, einen Epoxidgehalt von 2,5-3,5 Aequivalenten/kg und einen Erweichungspunkt von 70-100°C.

Die erfindungsgemässen Polyglycidylether enthalten wiederkehrende Einheiten der Formel I

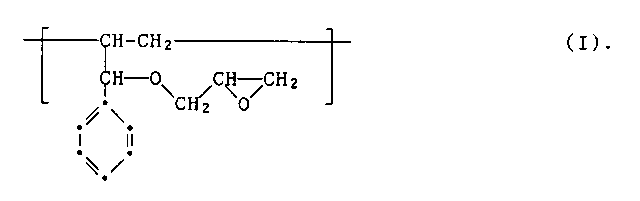

Eine mögliche Struktur der erfindungsgemässen Verbindungen wird durch Formel II dargestellt, 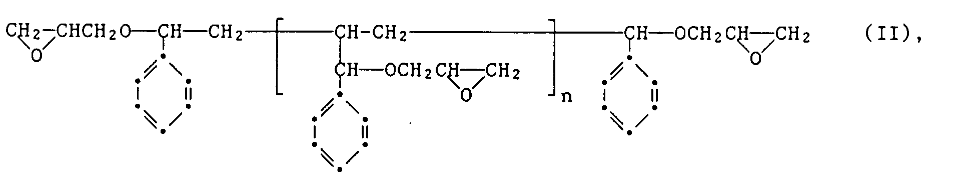
worin n eine ganze Zahl von 1 bis 5, vorzugsweise 2 bis 4, bedeutet.

Die neuen Polyglycidylether eignen sich als Epoxidharze zur Herstellung von vernetzten Produkten. Aufgrund ihrer oligomeren Struktur und ihrer Funktionalität sind die neuen Polyglycidylether in gewisser Beziehung vergleichbar mit Epoxyphenolnovolaken, sie zeichnen sich aber durch die guten Eigenschaften cycloaliphatischer Epoxidharze, wie z.B. hohe Wetterbeständigkeit, aus.

Gegenstand der vorliegenden Anmeldung sind somit auch härtbare Gemische enthaltend (a) einen erfindungsgemässen Polyglycidylether und b) einen Härter und/oder einen Härtungskatalysator für Epoxidharze.

Als Beispiele für Härtungsmittel seien die gebräuchlichen Härtungsmittel für Epoxidharze genannt, einschliesslich der aliphatischen, cycloaliphatischen, aromatischen und heterocyclischen Amine, wie Bis(4-aminophenyl)methan, Anilin-Formaldehyd-Harze, Bis(4-aminophenyl)sulfon, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)methan, 2,2-Bis(4-aminocyclohexyl)propan und 3-Aminomethyl-3,5,5-trimethylcyclohexylamin (Isophorondiamin), Polyaminoamide, wie beispielsweise solche aus aliphatischen Polyaminen und dimerisierten oder trimerisierten Fettsäuren, Dicyandiamid, Polyphenole, wie Resorcin, Hydrochinon, 2,2-Bis(4-hydroxyphenyl)propan und Phenol-Aldehyd-Harze, Polythiole, wie die im Handel unter der Bezeichnung "Thiokole" erhältlichen Polythiole, Polycarbonsäuren und ihre Anhydride, wie zum Beispiel Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3,4′,4′-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise Zinnsalze von Alkansäuren (zum Beispiel Zinnoctanoat), Friedel-Crafts-Katalysatoren, wie Bortrifluorid und Bortrichlorid und ihre Komplexe und Chelate, die durch Umsetzung von Bortrifluorid mit zum Beispiel 1,3-Diketonen erhalten werden.

Besonders geeignete Härtungsmittel sind gesättigte Polyester mit endständigen Carboxylgruppen, welche vorzugsweise im Durchschnitt mehr als zwei Carboxylgruppen pro Molekül, eine Säurezahl von 15 bis 100 und ein durchschnittliches Molekulargewicht von 500 bis 10000 haben. Die verwendeten Polyester sind vorzugsweise bei Zimmertemperatur fest und haben eine Glasumwandlungstemperatur von 40 bis 80°C. Solche Polyester sind z.B. in der US Patentschrift 3,397,254 und in der DE Offenlegungsschrift 21 63 962 beschrieben. Sie können z.B. durch Umsetzung von Polyestern mit endständigen Hydroxygruppen mit Tricarbonsäureanhydriden oder Tetracarbonsäuredianhydriden erhalten werden. Die Polyester mit endständigen Hydroxygruppen ihrerseits sind Reaktionsprodukte von Polyolen mit Dicarbonsäuren oder -säureanhydriden und haben zweckmässig einen durchschnittlichen Polykondensationsgrad von wenigstens 3, im allgemeinen von 3 bis 25, vorzugsweise von 5 bis 12. Geeignete Polyole sind z.B. Ethylenglykol, Glycerin, 1,4-Butandiol, Neopentandiol und Cyclohexandiol. Geeignete Dicarbonsäuren sind beispielsweise Isophthalsaure, Terephthalsäure, Cyclohexandicarbonsäure, Bernsteinsäure, Glutarsaure, Adipinsäure, Pimelinsäure, Suberinsäure, Azelainsäure oder Sebacinsäure.

Die Menge des eingesetzten Härtungsmittels richtet sich nach der chemischen Natur des Härtungsmittels und nach den gewünschten Eigenschaften der härtbaren Mischung und des gehärteten Produktes. Die optimale Menge kann leicht ermittelt werden. Wenn das Härtungsmittel ein Amin ist, werden normalerweise 0,75 bis 1,25 Aequivalente Aminwasserstoff pro 1 Epoxidäquivalent eingesetzt. Wenn Polycarbonsäuren, ihre Anhydride oder carboxylgruppenhaltige Polyester eingesetzt werden, verwendet man gewöhnlich 0,4 bis 1,5 Aequivalente Carboxylgruppe bzw. Anhydridgruppe pro 1 Aequivalent Epoxidgruppe. Bei der Verwendung von Polyphenolen als Härtungsmittel setzt man zweckmässig 0,75 bis 1,25 phenolische Hydroxylgruppen pro 1 Epoxidäquivalent ein.

Katalytisch wirkende Härtungsmittel werden allgemein in Mengen von 1 bis 40 Gewichtsteilen pro 100 Gewichtsteile Epoxidharz eingesetzt.

Man kann bei der Härtung ausserdem Härtungsbeschleuniger einsetzen; solche Beschleuniger sind z.B. tertiäre Amine, deren Salze oder quaternäre Ammoniumverbindungen, z.B. Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat; oder Alkalimetallalkoholate, wie z.B. Na-Alkoholate von 2,4-Dihydroxy-3-hydroxymethylpentan. Die Härtung der erfindungsgemässen Mischungen wird zweckmässig im Temperaturintervall von 15°C bis 300°C, bevorzugt von 25-250°C, durchgeführt.

Man kann die Härtung in bekannter Weise auch zwei- oder mehrstufig durchführen, wobei die erste Härtungsstufe bei niedriger Temperatur und die Nachhärtung bei höherer Temperatur durchgeführt werden.

Die Härtung kann gewünschtenfalls auch derart in 2 Stufen erfolgen, dass die Härtungsreaktion zunächst vorzeitig abgebrochen bzw. die erste Stufe bei wenig erhöhter Temperatur durchgeführt wird, wobei ein noch schmelzbares und/oder lösliches, härtbares Vorkondensat (sogenannte "B-Stufe") aus dem Polyglycidylether und dem Härter erhalten wird. Ein derartiges Vorkondensat kann z.B. als Lackstoff und gegebenenfalls zur Herstellung von "Prepregs", Verwendung finden.

Der Ausdruck "Härten", wie er hier gebraucht wird, bedeutet die Umwandlung der löslichen, in der Regel festen, schmelzbaren Polyepoxide in unlösliche und unschmelzbare, dreidimensional vernetzte Produkte bzw. Werkstoffe, und zwar in der Regel unter gleichzeitiger Formgebung zu Formkörpern, wie Giesskörpern, Presskörpern und Schichtstoffen, zu Imprägnierungen, Verklebungen und insbesondere Beschichtungen oder Lackfilmen.

Die erfindungsgemässen härtbaren Gemische können ferner, je nach Anwendung, geeignete Weichmacher, wie Dibutylphthalat, Dioctylphthalat oder Trikresylphthalat, enthalten.

Schliesslich können die erfindungsgemässen härtbaren Gemische vor der Härtung in irgendeiner Phase mit Streck-, Füll- und Verstärkungsmitteln, wie beispielsweise Steinkohlenteer, Bitumen, Textilfasern, Glasfasern, Asbestfasern, Borfasern, Kohlenstoff-Fasern, mineralischen Silikaten, Glimmer, Quarzmehl, Aluminiumoxidhydrat, Bentoniten, Kaolin, Kieselsäureaerogel oder Metallpulvern, z.B. Aluminiumpulver oder Eisenpulver, ferner mit Pigmenten und Farbstoffen, wie Russ, Oxidfarben, Titandioxid u.ä. versetzt werden. Man kann den härtbaren Gemischen ferner auch andere übliche Zusätze, z.B. Flammschutzmittel, wie Antimontrioxid und Thixotropiemittel zusetzen.

Die Herstellung der erfindungsgemässen härtbaren Mischungen kann in üblicher Weise mit Hilfe bekannter Mischaggregate (Rührer, Kneter, Walzen etc.) erfolgen.

Die erfindungsgemässen härtbaren Epoxidharzmischungen finden ihren Einsatz vor allem auf den Gebieten des Oberflächenschutzes, der Elektrotechnik, der Laminierverfahren und im Bauwesen. Sie können in jeweils dem speziellen Anwendungszweck angepasster Formulierung, im ungefüllten oder gefüllten Zustand, als Anstrichmitel, Lacke, wie Sinterpulverlacke, als Pressmassen, Tauchharze, Giessharze, Spritzgussformulierungen, Imprägnierharze und Klebmittel, als Werkzeugharze, Laminierharze, Dichtungsund Spachtelmassen, Bodenbelagsmassen und Bindemittel für mineralische Aggregate verwendet werden.

Wegen des tiefen Chlorgehaltes der Polyglycidylether eignen sich diese Epoxidharze besonders für Anwendungen, bei denen sich die Korrosion der mit dem Harz im Kontakt stehenden Metalle störend auswirkt, wie z.B. bei der Elektrobeschichtung von Metallen, als Lacke und Anstrichstoffe, Klebstoffe und elektrische Isolierstoffe.

Die mit den erfindungsgemässen Polyglycidylethern hergestellten ausgehärteten Produkte zeichnen sich durch gute chemische, thermische und mechanische Eigenschaften, besonders durch eine hohe Lösungsmittel-, Licht- und Wetterbeständigkeit, sowie durch gute Adhäsion aus.

Anhand ihrer Eigenschaften eignen sich die erfindungsgemässen härtbaren Gemische für die Herstellung von vernetzten Produkten, insbesondere von Pulverlacken. Gegenstand der Erfindung ist somit auch die Verwendung der erfindungsgemässen härtbaren Gemische für die Herstellung von vernetzten Produkten und insbesondere deren Verwendung als Komponenten von Pulverlacken.

Gewünschtenfalls können den härtbaren Gemischen noch weitere Zusätze, wie beispielsweise Lichtschutzmittel, Farbstoffe und insbesondere Entgasungsmittel, Verlaufmittel und/oder Pigmente beigegeben werden. Verlaufmittel ("flow control agents") sind z.B. Polyvinylacetale, wie Polyvinylbutyral ("Movital" B 30 H® der HOECHST), Polyethylenglykol, Polyvinylpyrrolidon, Glycerin, Acryl-Mischpolymerisate, wie "Modaflow"® oder "Acrylron" MFP® der MONSANTO bzw. der PROTEX, sowie Silicone, Wachse oder Stearate (welche zum Teil auch als Formtrennmittel Anwendung finden). Als Entgasungsmittel wird vorzugsweise Benzoin eingesetzt.

Die erfindungsgemässen Pulverlacke können durch einfaches Mischen der Bestandteile, z.B. in einer Kugelmühle, hergestellt werden. Eine andere Möglichkeit der Herstellung besteht darin, dass man die Bestandteile zusammen schmilzt, vorzugsweise in einer Mischmaschine, wie z.B. in einem Buss-Kokneter, und dann die abgekühlte Masse zerkleinert. Die Mischungen weisen vorzugsweise eine Partikelgrösse im Bereich von 0,015 bis 500 »m, und insbesondere von 10-75 »m, auf.

Die Pulverlacke werden in bekannter Weise auf den zu beschichtenden Gegenstand appliziert und vorzugsweise auf mindestens 120°C, insbesondere auf 150 bis 250°C, erhitzt, um das Harz auszuhärten. Die so erhaltenen Ueberzüge zeichnen sich durch Härte, Lösungsmittel- und Wetterbeständigkeit, einen hohen Glanzgrad sowie gute Haftung aus.

Die folgenden Beispiele erläutern die Erfindung näher.

### Beispiel 1: Herstellung des Polyglycidylethers

500 g Kunstharz SK® (modifiziertes hydroxylgruppenhaltiges Acetophenon-Formaldehyd-Harz der Hüls A.G.; Hydroxylgehalt: 5,3 Aeq/kg) und 19,7 g einer 50%-igen wässrigen Lösung von Tetramethylammoniumchlorid werden bei 60°C in 1470 g Epichlorhydrin gelöst. Der Druck wird auf 15 kPa gesenkt, womit die Destillation von Epichlorhydrin durch einen Wasserabscheider eingeleitet wird. Im Verlauf von 2 Stunden werden 240 g einer 50%-igen wässrigen Natriumhydroxidlösung zugetropft und das im Reaktionsgemisch vorhandene Wasser wird kontinuierlich durch Destillation entfernt, während Epichlorhydrin in das Reaktionsgefäss zurückgeführt wird. Nach vollständiger Abscheidung des Wassers wird das Gemisch noch weitere 2 Stunden erhitzt und dann auf Raumtemperatur abgekühlt. Das ausgefallene NaCl wird abfiltriert und mit Epichlorhydrin gewaschen. Die kombinierte Epichlorhydrinlösung wird mit 300 ml einer 10%-igen wässrigen NaH₂PO₄-Lösung und mit Wasser gewaschen und dann über Na₂SO₄ getrocknet. Das Lösungsmittel wird am Rotationsverdampfer eingedampft und der Rest wird bei 135°C und 2 kPa getrocknet. Man erhält 587,2 g eines leicht gelblichen, festen Harzes mit den folgenden Eigenschaften:
M̅ₙ (Gelpermeationschromatographie in THF) = 891
M̅_{w}/M̅ₙ = 1,41
Epoxidgehalt = 3,02 Aeq./kg
Erweichungspunkt = 84°C
Gesamtchlorgehalt = 0,1 Gew.%.

### Beispiel 2: Herstellung eines Pulverlackes

Komponenten: 170 g Polyglycidylether gemäss Beispiel 1,
830 g eines festen carboxylgruppenendständigen gesättigten Polyesters (URALAC® 3400 der Firma Scado, Säuregehalt: 0,61 Aeq/kg),
20 g eines Gemisches aus 12,5 Gewichtsteilen Alkyl-trimethylammoniumbromid (Morpan® CHSA der Frima ABM Ghemicals) und
87,5 Gewichtsteilen eines festen, gesättigten, carboxylgruppenhaltigen Polyesterharzes (Neoxil® TPC 83 der Firma Savid).

Die Komponenten werden gemeinsam während 30 Sekunden in einer Analysenmühle gemahlen. Danach wird das Pulver auf ein gereinigtes Aluminiumblech aufgetragen und 30 Minuten bei 180°C gehärtet. Der entstandene Lackfilm hat eine Dicke von 40-60 »m. Die Messwerte sind in der Tabelle angegeben.

**Tabelle**

| Prüfung | |
|---|---|
| Erichsentiefung (DIN 53156, mm) | > 10 |
| Schlagrevers¹ (cm·kg) | 50 |
| Acetontest² (Note) | 3 |
| Haftung³ (Gitterschnitt, Note) | 0 |

| | |
|---|---|
| ¹ Auf die beschichteten Aluminiumbleche wird von hinten aus bestimmter Höhe ein Stempel mit einem bekannten Gewicht fallengelassen. Der erhaltene Wert (Höhe mal Gewicht) zeigt den grössten Schlag an, bei dem die Beschichtung noch unbeschädigt bleibt. | |
| ² Ein mit Aceton getränkter Lappen wird eine Minute lang auf der beschichteten Oberfläche liegen gelassen. Anschliessend wird die behandelte Oberfläche mit dem Fingernagel auf ihre Lösungsmittelresistenz hin überprüft. Die Bewertung erfolgt nach einer Skala von 0 bis 5, wobei 0 ausgezeichnete und 5 schlechte Resistenz bedeutet. | |
| ³ Die Bewertung erfolgt nach einer Skala von 0 bis 5, wobei 0 ausgezeichnete und 5 schlechte Haftung bedeutet. | |

## Patentansprüche

1. Polyglydicylether, die dadurch erhältlich sind, dass man Acetophenon mit 0,7 bis 1,4 Mol Formaldehyd pro Mol Acetophenon in Gegenwart eines alkalischen Katalysators bei einer Temperatur von 50-100°C zu einem carbonylgruppenhaltigen Acetophenon-Formaldehyd-Harz umsetzt, das carbonylgruppenhaltige Harz zu einem modifizierten hydroxylgruppenhaltigen Acetophenon-Formaldehyd-Harz hydriert, dieses Harz anschliessend mit Epichlorhydrin in Gegenwart eines Phasentransferkatalysators in den entsprechenden Polychlorhydrinether überführt, und diesen mit einer Base dehydrochloriert.

2. Polyglycidylether nach Anspruch 1, worin pro Mol des Acetophenons 0,9 bis 1,1, vorzugsweise 1,0 Mol Formaldehyd eingesetzt werden.

3. Polyglycidylether nach Anspruch 1, worin pro Mol des Acetophenons 0,05 bis 0,3 Mol, vorzugsweise 0,1 bis 0,2, Mol des alkalischen Katalysators verwendet werden.

4. Polyglycidylether nach Anspruch 1, worin der alkalische Katalysator ein Alkalimetallhydroxid, ein Erdalkalimetallhydroxid oder -oxid, ein Alkalimetallalkoholat oder eine organische Base ist.

5. Polyglycidylether nach Anspruch 1, worin die Umsetzung zum carbonylgruppenhaltigen Acetophenon-Formaldehyd-Harz bei 60 bis 90°C während 2 bis 5 Stunden, vorzugsweise in wässriger Lösung, vorgenommen wird.

6. Polyglycidylether nach Anspruch 1, worin die Hydrierung des carbonylgruppenhaltigen Harzes zum hydroxylgruppenhaltigen Harz in einem inerten Lösungsmittel oder in der Schmelze in Gegenwart von Hydrierungskatalysatoren vorgenommen wird.

7. Polyglycidylether nach Anspurch 1, worin die Umsetzung des hydroxylgruppenhaltigen Acetophenon-Formaldehyd-Harzes zum Polyglycidylether mit einem Ueberschuss an Epichlorhydrin ohne Lösungsmittel durchgeführt wird, wobei der Phasentransferkatalysator und die Base als wässrige Lösungen beigegeben werden.

8. Polyglycidylether nach Anspruch 1, mit einem Molekulargewicht M̅ₙ von 800-1100, einem M̅_{w}/M̅ₙ von 1,20-1,60, einem Epoxidgehalt von 2,5-3,5 Aequivalenten/kg und einem Erweichungspunkt von 70-100°C.

9. Polyglycidylether nach Anspruch 1 mit wiederkehrenden Einheiten der Formel I

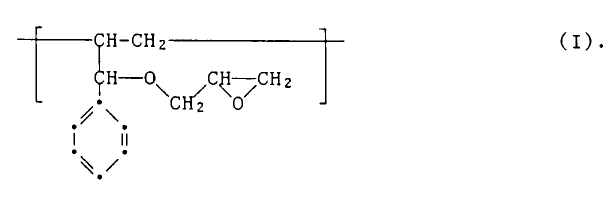

10. Polyglycidylether nach Anspruch 1 der Formel II 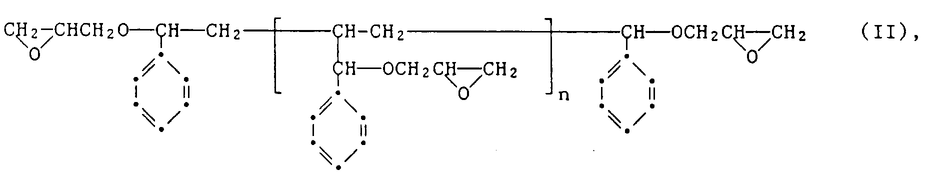 worin n eine ganze Zahl von 1 bis 5 bedeutet.

11. Härtbare Gemische enthaltend
(a) einen Polyglycidylether nach Anspruch 1, und
(b) einen Härter und/oder einen Härtungskatalysator für Epoxidharze.

12. Verwendung der härtbaren Gemische nach Anspruch 11 zur Herstellung von vernetzten Produkten.

13. Verwendung der härtbaren Gemische nach Anspruch 11 als Komponenten von Pulverlacken.

## Claims

1. A polyglycidyl ether which is obtainable by reacting acetophenone with 0.7 to 1.4 mol of formaldehyde per mole of acetophenone, in the presence of an alkaline catalyst and at a temperature from 50 to 100°C, to give a carbonyl-containing acetophenone/formaldehyde resin, hydrogenating the carbonyl-containing resin to give a modified hydroxyl-containing acetophenone/formaldehyde resin, subsequently converting said resin with epichlorohydrin, in the presence of a phase transfer catalyst, into the corresponding polychlorohydrin ether, and dehydrochlorinating said ether with a base.

2. A polyglycidyl ether according to claim 1, wherein 0.9 to 1.1 mol, preferably 1.0 mol, of formaldehyde is used per mole of acetophenone.

3. A polyglycidyl ether according to claim 1, wherein 0.05 to 0.3 mol, preferably 0.1 to 0.2 mol, of the alkaline catalyst is used per mole of acetophenone.

4. A polyglycidyl ether according to claim 1, wherein the alkaline catalyst is an alkali metal hydroxide, an alkaline earth metal hydroxide or oxide, an alkali metal alcoholate or an organic base.

5. A polyglycidyl ether according to claim 1, wherein the reaction to give the carbonyl-containing acetophenone/formaldehyde resin is carried out at from 60 to 90°C over 2 to 5 hours, preferably in aqueous solution.

6. A polyglycidyl ether according to claim 1, wherein the hydrogenation of the carbonyl-containing resin to give the hydroxyl-containing resin is carried out in an inert solvent or in the melt in the presence of a hydrogenation catalyst.

7. A polyglycidyl ether according to claim 1, wherein the reaction of the hydroxyl-containing acetophenone/formaldehyde resin to give the polyglycidyl ether is carried out with an excess of epichlorohydrin without solvent, the phase transfer catalyst and the base being added in the form of aqueous solutions.

8. A polyglycidyl ether according to claim 1, having a molecular weight M̅ₙ of 800-1100, a M̅_{w}/M̅ₙ of 1.20-1.60, an epoxide content of 2.5-3.5 equivalents/kg and a softening point of 70-100°C.

9. A polyglycidyl ether according to claim 1, which contains recurring units of formula I

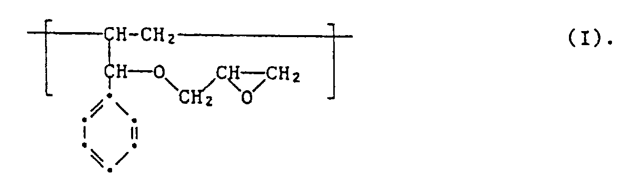

10. A polyglycidyl ether according to claim 1 of formula II 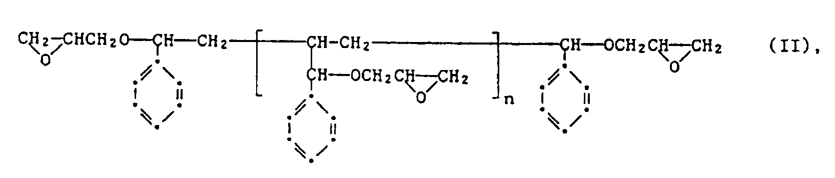 in which n is an integer from 1 to 5.

11. A curable mixture comprising
(a) a polyglycidyl ether according to claim 1, and
(b) a hardener and/or a curing catalyst for epoxy resins.

12. The use of a curable mixture according to claim 11 for the preparation of crosslinked products.

13. The use of a curable mixture according to claim 11 as a component of powder coatings.

## Revendications

1. Ethers polyglycidyliques que l'on peut obtenir en faisant réagir l'acétophénone avec 0,7 à 1,4 mole de formaldéhyde pour mole d'acétophénone en présence d'un catalyseur basique, à une température de 50 à 100 °C, pour obtenir une résine acétophénone-formaldéhyde contenant des groupes carbonyle, en hydrogénant la résine contenant des groupes carbonyle pour donner une résine acétophénone-formaldéhyde modifiée contenant des groupes hydroxyle, en transformant ensuite cette résine avec l'épichlorhydrine en présence d'un catalyseur de transfert de phases en le polychlorhydrine-éther correspondant et en déshydrochlorant celui-ci au moyen d'une base.

2. Ethers polyglycidyliques selon la revendication 1, où on utilise pour mole d'acétophénone de 0,9 à 1,1 mode, de préférence 1,0 mole de formaldéhyde.

3. Ethers polyglycidyliques selon la revendication 1, où on utilise pour mode d'acétophénone de 0,05 à 0,3 mode, de préférence de 0,1 à 0,2 mode de catalyseur basique.

4. Ethers polyglycidyliques selon la revendication 1, où le catalyseur basique est un hydroxyde de métal alcalin, un hydroxyde ou oxyde de métal alcalino-terreux, un alcoolate de métal alcalin ou une base organique.

5. Ethers polyglycidyliques selon la revendication 1, où la réaction pour obtenir la résine acétophénone-formaldéhyde contenant des groupes carbonyle est mise en oeuvre à des températures de 60 à 90 °C, pendant 2 à 5 heures, de préférence en solution aqueuse.

6. Ethers polyglycidyliques selon la revendication 1, où l'hydrogénation de la résine contenant des groupes carbonyle en résine contenant des groupes hydroxyle est mise en oeuvre dans un solvant inerte ou dans la matière fondue, en présence d'un catalyseur d'hydrogénation.

7. Ethers polyglycidyliques selon la revendication 1, où la réaction de la résine acétophénone-formaldéhyde contenant des groupes hydroxyle en éthers polyglycidyliques est effectuée avec un excès en épichlorhydrine sans solvant, en ajoutant le catalyseur de transfert de phases et la base sous forme de solutions aqueuses.

8. Ethers polyglycidyliques selon la revendication 1, ayant un poids moléculaire M̅ₙ de 800 à 1100, un M̅_{w}/M̅ₙ de 1,20 à 1,60, une teneur en époxyde de 2,5 à 3,5 équivalents/kg et un point de ramollissement de 70 à 100 °C.

9. Ethers polyglycidyliques selon la revendication 1, comportant des unités récurrentes de formule I :

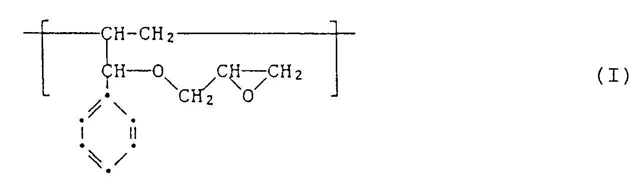

10. Ethers polyglycidyliques selon la revendication 1, de formule II : 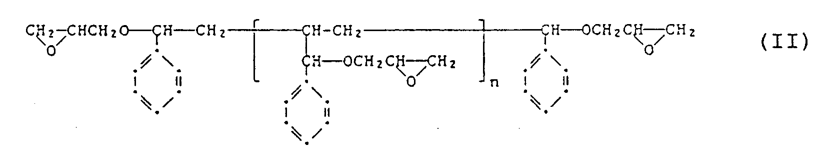 où n vaut un nombre entier de 1 à 5.

11. Mélanges durcissables contenant
(a) un éther polyglycidylique selon la revendication 1, et
(b) un agent de durcissement et/ou un catalyseur de durcissement pour des résines époxydes.

12. Utilisation du mélange durcissable selon la revendication 11, pour la préparation de produits réticulés.

13. Utilisation du mélange durcissable selon la revendication 11, en tant que composant de vernis en poudre.
